# EUROPEAN PATENT APPLICATION

(11) **EP 1 311 124 A1**
(43) Date of publication of application: **14.05.2003**
(21) Application number: 02024925.6
(22) Date of filing: 06.11.2002
(51) Int. Cl.: H04N 7/24

(54) **Selective protection method for images transmission**

(30) Priority: 13.11.2001 JP 2001346949
(71) Applicant: MATSUSHITA ELECTRIC INDUSTRIAL CO., LTD., Kadoma-shi, Osaka 571-8501 (JP)
(72) Inventor: Imagawa, Kazuyuki, Fukuoka-shi, Fukuoka-ken, Fukuoka (JP); Matsuo, Hideaki, Yokohama-shi, Kanagawa-ken, Yokohama (JP); Takata, Yuji, Yokohama-shi, Kanagawa-ken, Yokohama (JP); Iwasa, Katsuhiro, Iizuka-shi, Fukuoka-ken, Izuka (JP); Nishi, Takaaki, Iizuka-shi, Fukuoka-ken, Iizuka (JP); Fukumiya, Eiji, Iizuka-shi, Fukuoka-ken, Iizuka (JP)
(74) Representative: Holmes, Miles

(57) **Abstract**

An image series including one or more images and control information that is related to the images of the image series and concerns disclosure/nondisclosure of the images are communicated. The control information is related to either or both of a focused-region and a non-focused region which include a part or all of an object within the image, and indicates whether or not the regions are to be disclosed. The control information also adapts to disclosure/nondisclosure to specific/unspecified users.

## Description

The present invention relates to a communications method for carrying out communications using images for videophones, TV conferences, and video mails, or a communications control method for controlling communications using images between communications devices, and a device for the same method.

As generally known, as a device and method for communications using images, there are various systems such as videophones, TV conference systems, and video mail. The main purpose in use of images in all of these systems is to image an appearance of an object (for example, a face) and transmit the image to a communications destination.

However, these systems lack consideration in privacy protection. For example, in a case where an object is a user himself/herself, since image data capturing the user's face is transmitted to a communications partner without any processing and is displayed on a display of the communications partner, a user who does not want the communications partner to see his/her face cannot protect his/her privacy, and suffers mental distress.

Also, when such a system is used at home or an office, even in a case where a user does not want to transmit images showing a condition inside the home or office, images showing the condition are transmitted together with the user's appearance, and this is disadvantageous in terms of protection of privacy and confidentiality inside the office.

Therefore, in order to cope with such a problem, Japanese Unexamined Patent Publication No. H05-91407 discloses a technique for protecting domestic privacy and confidentiality inside an office by eliminating the background from images shot by a camera and transmitting the images.

Furthermore, Japanese Unexamined Patent Publication No. H06-46414 discloses a technique for protecting users' privacy in which the facial portion of a person is detected from an image inputted from a camera and processed so as not to be recognized by others, and then transmitted to the other party.

Moreover, Japanese Unexamined Patent Publication No. 2000-175168 discloses a technique for transmitting user's emotions using images while protecting privacy by displaying representative images such as character images which are optionally variable and represent the communications partner's real images on display screens of the communications partner.

Currently, due to the development of broadband networks, communications using images have become more commonplace than previously. Accordingly, it has become a matter of course to store communications data and reuse the data at a later time. Therefore, demand for protection of privacy of images which image a user himself/herself have increased more than before.

Furthermore, it is easily expected from the current situation of electronic mail systems and web systems that user demand for convenience and ease in image data retrieval and management will increase in order to store and reuse image data.

On the other hand, as a communications method in which a plurality of users at multipoints communicate using images, a TV conference system exists using a centralized operation unit. In this case, it is possible that an image to be transmitted is transmitted to two or more image communications devices from one image communications device via a centralized operation unit.

In such a TV conference system at multipoints, in a case where a technique for protecting privacy is applied, for example, by eliminating a background or processing a facial region for privacy protection, an image in which a background has been eliminated or a facial region has been processed is uniformly transmitted to all members participating in a conference.

As mentioned above, among systems in which a plurality of users at multipoints communicate using images, in addition to systems to be used exclusively for conferences, there is a case where unspecified users participate such as in web chats (hereinafter, referred to as video chats) and a case where communications are carried out among a plurality of users at multipoints using video mail or mail attached with images.

In such a case, demand for controlling image disclosure information (that is, information as to whether or not an object region is disclosed and whether or not a background region is disclosed) depending on a communications partner arises. For example, a case can be supposed where an image communications device user does not mind revealing his/her face to a specific image communications device user, but minds to reveal his/her face to other users.

Also, in TV conference systems for a business conference at multipoints, in a case where both in-house users and outside users exist, it is considered that images are transmitted to outside users after eliminating a background although the background is allowed to be seen by in-house users.

However, in the case of the conventional technique, when it is desired to eliminate a background or process a facial region for privacy protection, images in which backgrounds have been eliminated or facial regions have been processed must be uniformly transmitted to all members joining a video chat or TV conference. This becomes very inconvenient for users.

Furthermore, in a case where communications data including these images is recorded and managed as they are, at a later time, it is desired to retrieve backgrounds and unprocessed facial regions, and it is required to scan the whole image series, resulting in poor efficiency.

Furthermore, in management of a recorded image series, since information on disclosure of the data of an image series is separately recorded and managed, such information may be lost, misplaced, or deleted by mistake.

Therefore, an object of the invention is to provide a communications method in which a function of privacy protection is added for communications of images, and even when the function of privacy protection is added, privacy protection is convenient for users and can be easily controlled in reuse of communications data and communications among multipoints.

The present invention makes it possible to communicate an image series including one or more images and control information which is related to at least one of the image series and indicates whether or not the image is disclosed, wherein the control information is related to either or both of a focused region including a part or all of an object within an image and a non-focused region.

The present invention solves the problems in the prior art by transmitting and receiving control information together with images.

As embodiments of a system according to the invention, a first embodiment to carry out one-on-one communications between communications devices and a second embodiment to carry out multi-point communications among three or more communications devices by a communications control unit for controlling communications among the communications devices are considered.

The above, and other objects, features and advantages of the present invention will become apparent from the following description read in conjunction with the accompanying drawings, in which like reference numerals designate the same elements.
Fig. 1 is a block diagram of a communications device in the first embodiment of the invention;
Fig. 2 is an explanatory view of a meta-data describing format of the same;
Fig. 3 is a drawing showing the relation of an image series and meta-data of the same;
Fig. 4 and Fig. 5 are drawings showing examples describing the same meta-data in the MPEG-7 format;
Fig. 6 is a format definition chart of the "Media Time Point Type" format of the same data;
Fig. 7 is an illustration of original input data of the same data;
Figs. 8(a) and (b) are illustrations in which a non-focused region (background) of the same data is set as a nondisclosure region;
Figs. 9(a) through (c) are illustrations in which a focused region of the same data is set as a nondisclosure region;
Fig. 10 is an illustration in which the same focused region has been subjected to processing for superimposing a predetermined image;
Fig. 12 is an illustration of output data of the same data;
Fig. 13 is a block diagram of a communications control unit in a second embodiment;
Fig. 14 is an explanatory view of a meta-data describing format of the same;
Fig. 15 is an illustration describing the same meta-data in the MPEG-7 format;
Fig. 16 is an explanatory view of a transmitting and receiving condition between the same communications control unit and respective communications devices;
Fig. 17 is an explanatory view of a group setting example of the same;
Fig. 18 is an explanatory view of a transmitting and receiving condition between the same communications control unit and respective communications devices.

Hereinafter, embodiments of the invention will be described with reference to the accompanying drawings.

### (First embodiment)

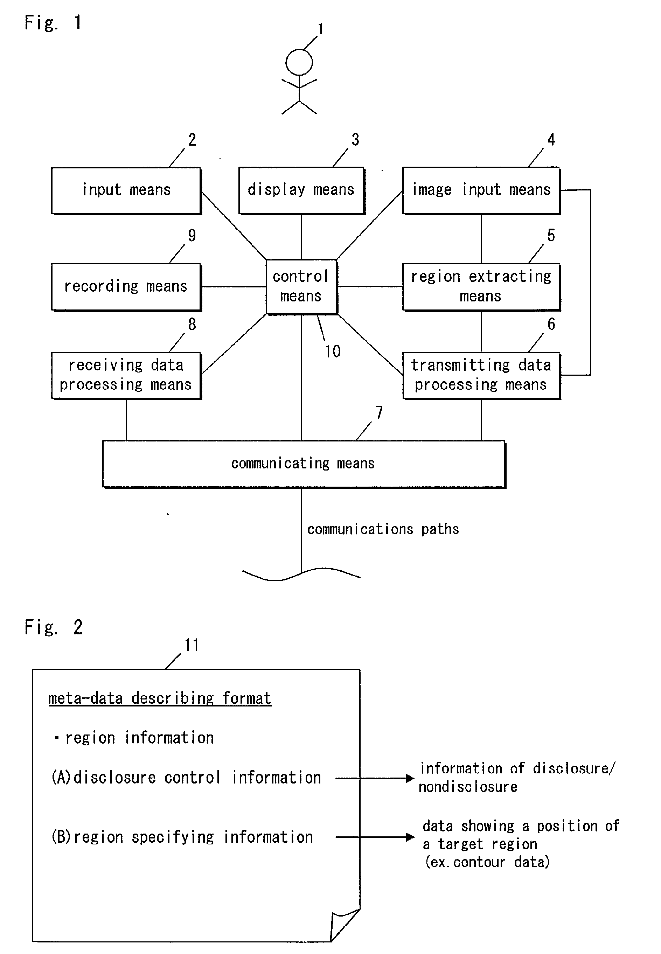

In the first embodiment, a case where one-on-one communications are carried out by a communications method and a device for the same according to the invention will be described. Fig. 1 is a block diagram of a communications device in the first embodiment of the invention.
In this communications device, an input means 2, a display means 3, and an image input means 4 face a user 1 side.

The input means 2 comprises a keyboard (including a numeric keypad, etc.) and a mouse, and is used by the user 1 to input control information on disclosure or nondisclosure and other necessary information into this communications device.

Herein, in a case where this communications device is used as a monitoring system or a surveillance system using the image input means 4, it is desirable that a reader is added to the input means 2.

Thereby, even if the user 1 does not carry out keyboard input, control information on disclosure or nondisclosure of an image shot by the image input means 4 can be inputted into this communications device.

For example, the user 1 carries a batch with an IC card or an ID chip built-in wireless tag, which can carry out wireless communications with the input means 2, and records control information on disclosure and nondisclosure onto this IC card or ID chip in advance. Thereby, the user 1 can easily input this control information into the communications device when carrying the batch or wireless tag.

Disclosure control information indicates whether or not the user 1 will disclose either or both of a focused region and a non-focused region which includes a part or all of an object, as described in detail later.

The display means 3 consists of an LCD or the like, and images transmitted from a communications partner and information necessary for operations are displayed on the display screen.

The image input means 4 is used for inputting an image series consisting of at least one or more images into this communications device, and various types exist such as a camera, a data input device, and a data recording medium. Normally, as this image series, an image series imaging the user 1 is mainly used.

A region extracting means 5 extracts a focused region including a part or all of an object from images of this image series.

A focused region is a region including a part or all of an object, and a non-focused region is a region other than the focused region 1 in an image, for example, a background.

Conventionally, various techniques have been disclosed as means for extracting an object region.

For example, in Japanese Unexamined Patent Publication No. H05-91407, a relative comparison between video signals of adjacent frames of a moving picture is carried out, and an image portion in which the amount of action is small is defined as a background portion, and a portion other than the background portion is extracted as an object region.

Furthermore, in Japanese Unexamined Patent Publication No. H05-161131, an image including only a background is held in advance, and differences between the image including only the background and respective frames of a moving picture are detected for each pixel, and a region in which such a difference is small is defined as a background region, and a region with a large difference is defined as an object region.

Furthermore, in a case where the focused region is a head or facial region, according to "Detection and tracing of a person's head based on an adaptable vision model using a fixed-viewpoint pan tilt zoom camera" by Taniuchi (pp. 9-14, Lecture Collected Papers I, Meeting on Image Recognition and Understanding (MIRU2000), an elliptic region in an image is detected to detect a head portion.

In addition, there are generally-known various methods in which a face is detected based on color information (for example, a skin-color region is detected), a facial portion such as the eyes or mouth is focused, or template-matching is used).

Including the methods mentioned above, various techniques for region extraction have been disclosed, and any of these techniques can be used in this region extracting means 5.

Furthermore, in the invention, the purpose of region extraction is to protect privacy, so that it is not always necessary to accurately extract an object region, and even a manner in which a part or all of an object is concealed to protect privacy is also sufficient. For example, when a focused region is a head or facial region, an elliptic region including a part or all of the focused region may be detected.

Furthermore, in the present embodiment, the region extracting means 5 automatically extracts a focused region, however, in a case where the location of the focused region in an image inputted from the image input means 4 is already known, the region extracting means 5 can be omitted.

Furthermore, the invention targets privacy protection, so that it is desirable that a portion showing person's characteristics, particularly the face, head, or a part thereof is defined as a focused region.

Furthermore, the user 1 or an administrator of this communications device may set a focused region as a fixed region previous to shooting, or the user 1 or an administrator of this communications device manually sets a focused region while monitoring images shot by the image shot by the image input means 4.

A transmitting data processing means 6 prepares control information in which an image inputted from the image input means 4, a focused region extracted from the region extracting means 5, and disclosure control information inputted from the input means 2 are related to each other, and prepares data for communications together with the image.

Depending on a communications partner, transmitting data for which processing has been applied according to the focused region and the non-focused region so that the details of a nondisclosure region are prevented from being revealed to the communications party is prepared. The details of this will be described later.

A communicating means 7 transmits or receives at least the abovementioned data to or from an opposite information processing device via communications paths. Herein, a communications mode is optional, for example, synchronized communications as in the case with a videophone, or asynchronous communications such as electronic mail.

A receiving data processing means 8 processes data received from a communications partner side via the communicating means 7 so that the data can be recorded into a recording means 9 or displayed on the display means 3.

The recording means 9 consists of a memory or a hard disk device, and has a region for recording at least receiving data of the receiving data processing means 8.

A control means 10 controls data flows and processing of the respective means shown in Fig. 1.

Next, with reference to Fig. 2 through Fig. 5, an image series (including still images) to be communicated between communications devices and disclosure control information in the communications method of the present embodiment will be described.

An image series is, as mentioned above, data inputted from the image input means 4. An image series is generally termed a type of contents, and it is desirable that disclosure control information is described in meta-data concerning a contents description generated to be paired with an image series that is one piece of the contents.

Fig. 2 shows a meta-data describing format to be used in this embodiment. In this description, "Region information" indicates which of a focused region and a non-focused region a target region is.

"Disclosure control information" is a flag indicating whether or not a target region is to be disclosed. For example, at a certain stage of the contents, to define a focused region as a nondisclosure region, disclosure control information of region information on the focused region is set as "nondisclosure".

In another frame, to change the focused region to a disclosure region, the disclosure control information is changed to "disclose". This setting can be made for each of a focused region and a non-focused region. This setting is made by the user 1 via the input means 2.

Furthermore, in place of the disclosure and nondisclosure flags, values of disclosure levels may be set. For example, when disclosure levels are indicated by values of 0 through 1, the disclosure level "0" indicates nondisclosure, and the disclosure level "1" indicates disclosure.

In a case of values between 0 and 1, for example, a disclosure level "0.8", processing for varying the disclosure degree using parameter control in image processing is executed.

"Region specifying information" is data showing a position of a target region in an image (for example, a contour coordinate row).

There is a case where a target region includes the whole image and a case where a target region does not exist in an image. As a method for specifying a target region, in addition to setting a contour coordinate row, setting of binary data as mask data is possible.

Furthermore, in a case where the shape (rectangular, polygon, or ellipse) of a target region is known in advance, the position may be indicated by only information that is sufficient to show the position. The invention can also be applied to not only one image but also a moving picture.

In this case, as information specifying a target region, not only information showing its spacial position but also information showing time intervals or information showing the manner of spacial movements of a target region may be used. These cases are also included in the invention.

Furthermore, in addition to disclosure control information, descriptions concerning contents such as "contents encoding types" are included in meta-data. Furthermore, the contents may be described as a table or hierarchically described. In the present embodiment, as shown in Fig. 2, disclosure control information is hierarchically described so as to be dependent on region information.

Of course, it is also possible that region information and disclosure control information are independently'described and the relationship between them is separately described. Any of the abovementioned cases is included in the invention only if disclosure control information and region information are set in any form.

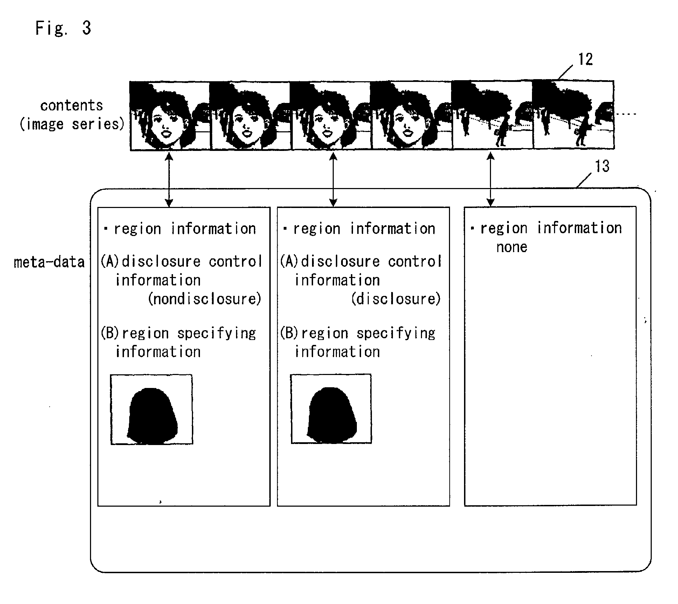

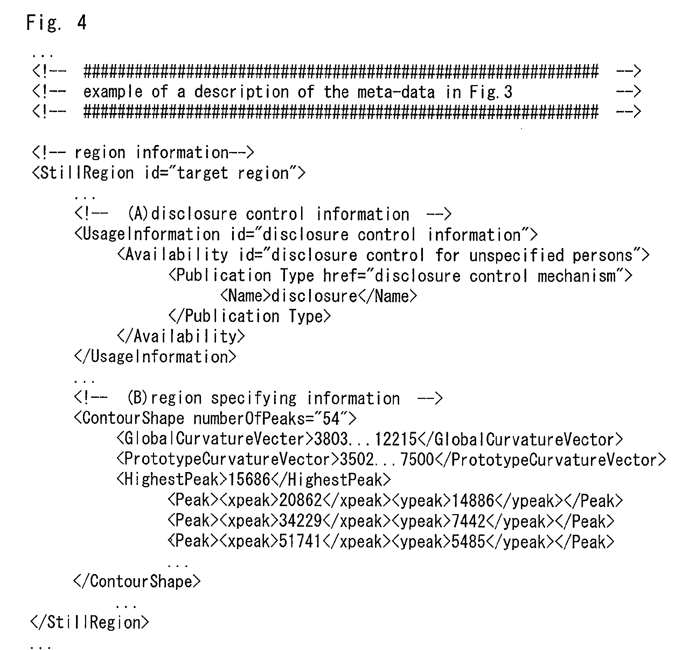

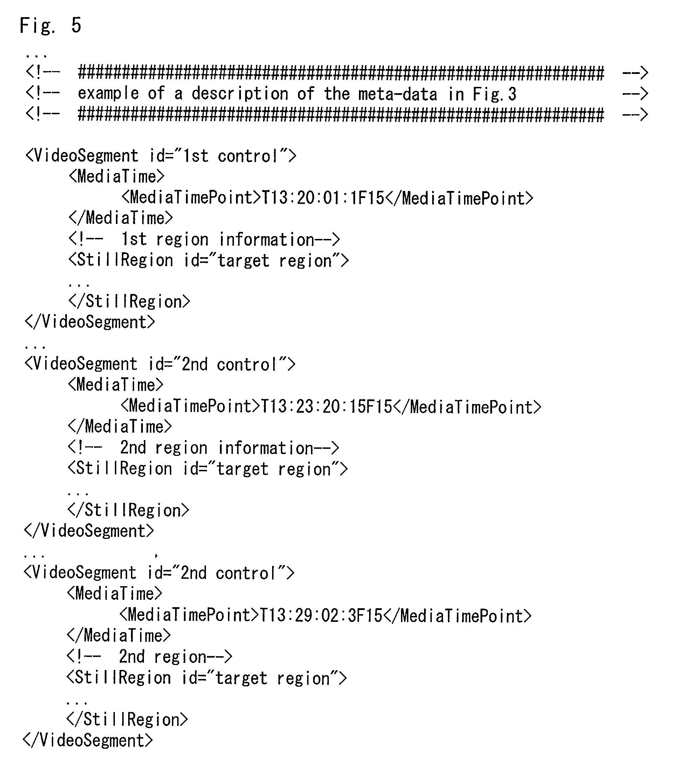

Fig. 3 illustrates the relation of an image series and meta-data. In this example, an image series consists of a row of a plurality of still images (referred to as frames).

In this image series, for example, an optional appropriate format such as an analog, digital, interlace, progressive, encoding, or decoding format can be used.

Among the frames, there are four frames including an object (in this example, a face of a young woman) and two frames that do not include it.

Disclosure control information to be described in meta-data can be related to several optional frames in an image series such as one frame, a sequential frame group, a non-sequential frame group, or the entire image series.

For the disclosure control information, a flag indicating whether or not region information is to be disclosed is set. For example, at a certain stage of the contents, in a case where a focused region is set as a nondisclosure region, a flag is set as "nondisclosure".

Furthermore, in a different frame, in a case where a focused region is changed to allow disclosure, at this point, a flag "disclosure" is set.

As a format describing meta-data used herein, various standards and unique standards exist. Herein, a description giving an example based on the MPEG-7 will be described.

The MPEG-7 is the fourth standardizing item following the MPEG-1, MPEG-2, and MPEG-4 of MPEG (Moving Picture Experts Group: ISO/IEC JTC1/SC29/WG11) formally called Multimedia Content Description Interface (ISO/IEC 15938).

This standardization includes standards to be used for regulating a schema for describing the contents of multimedia information and used for applications of retrieval and editing from a digital library.

Furthermore, the MPEG-7 regulates a standard group of descriptors for describing the contents of multimedia information mainly corresponding to images and sound. By providing description using descriptors for the contents, retrieval based on the contents of the multimedia information becomes possible.

This is intended to promote circulation and use of the contents by this. Therefore, a description form according to said standards is preferable in the invention that has been developed for the purpose of communications involving privacy protection.

As an actual description definition language, a language obtained by applying necessary extension to the XML (eXtensible Markup Language) Schema language is used. Furthermore, compatibility with the grammar of the XML Schema is maintained even after such extension.

In the MPEG-7, to describe a characteristic expression of the contents, the following basic elements may be combined.

### 1. Descriptor (abbreviated to D)

This is a basic tool for describing a single characteristic of multimedia contents. In the MPEG-7, a notation system (Syntax) and meaning (Semantics) of descriptors are regulated.

### 2. Description schema (abbreviated to DS)

This schema regulates the structures and semantic relationships among a plurality of describing tools. As descriptors, in the MPEG-7, a notation system (Syntax) and meanings (Semantics) of the description schema are regulated. In describing tools composing the description schema, other description schemata themselves are also included in addition to the descriptors.

### 3. Description definition language

This is a language for regulating a notation system of the descriptors and the description schema. In the MPEG-7, by using the XML schema that is a schema language standardized and formulated according to W3C as a base, various data types that become necessary to describe characteristics of multimedia contents are added to regulate the description definition language.

As examples of DS, "Person DS" for describing contents users, "Still Region DS" for describing regions within an image, and "Usage Information DS" for describing a method for using contents exist.

As an example of a descriptor, "Rights" for describing an access right to contents exists.

In the MPEG-7, in addition to the DS and descriptor defined as standards, new descriptors and languages for defining and extending the DS (Description definition language) are regulated.

Therefore, a description of meta-data in the invention becomes a description in the MPEG-7 format by description according to the abovementioned regulations.

Fig. 4 shows an example of a description of the meta-data shown in Fig. 3 according to the MPEG-7 standards. In Fig. 4, "<!- -" is a comment, and region information is described by using "Still Region DS".

Disclosure control information is described by "Publication Type" in "Availability DS" of "Usage Information DS".

In this "Publication Type", a mechanism for distribution of these contents can be described.

Herein, by describing disclosure/nondisclosure information that the disclosure control mechanism uniquely provides, a mechanism of disclosure control in a case of distribution of contents is determined.

Region specifying information is described as a contour coordinate series by using "Contour Shape".

As mentioned above, as region information, in addition to region information of one image, information of a moving region "Moving Region DS" and region information "Audio Visual Region DS" integrated with sounds exist.

As a basic definition including these, there is "Segment DS" showing a part of multimedia contents, and according to a DS based on this definition, a description equivalent to the description shown in Fig. 4 is possible.

Next, relevance to a moving picture will be described in detail. Fig. 5 shows an example of a description of the meta-data of Fig. 3 according to MPEG-7 standards.

In Fig. 5, the region information shown in Fig. 4 is related to a target image frame. In this case, actual relation to an image frame is carried out in "Media Time Point" of "Media Time".

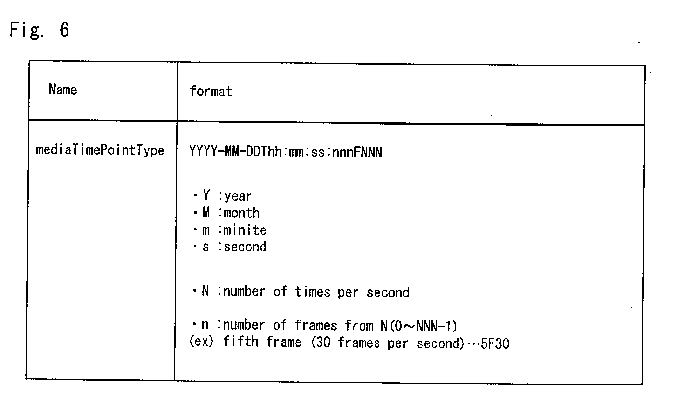

In "Media Time", a target video segment time is described in the format shown in Fig. 6. For example, "T13:20:01:1F15" means "the first frame at thirteen hundred hours twenty minutes and one second (15 frames per minutes, 0 through 14 frames provided)".

Thereby, it becomes possible to control only a partial section in a moving picture so as to be disclosed.

The abovementioned description is just an example, and other description methods are included in the invention if an equivalent meaning is obtained.

In the MPEG-7, meta-data is expressed by the XML. Currently, XML has received significant attention in the field of information processing due to its versatility, and various tools for editing and operating XML documents have been provided, and since MPEG-7 meta-data is expressed by using XML, it can receive maximum benefits of these XML versatile tools.

Furthermore, affinity with other standards based on XML, such as HTML (Hyper Text Markup Language) and SMIL (Synchronized Multimedia Integration Language) is high.

In the invention, a description is sufficient if the description is made in a format related to contents, so that various meta-data descriptions are possible including the abovementioned standards.

In the invention, a meta-data description is explained based on a description in a text format for convenience of explanation in the drawings, however, a binary format can also be used, and is included in the invention.

For example, in a case where various characteristics of multimedia contents are described as an XML document, there is a concern that the size of the MPEG-7 meta-data itself becomes massive, resulting in storage or transmission inefficiency.

As a countermeasure for this, use of a binary format regulated in the MPEG-7 is considered. Thereby, it becomes possible to compress the MPEG-7 meta-data described as an XML document up to a size of 1/100 or less without a loss of the information contents. In this format, a meta-data description according to the text format and a meta-data description according to the binary format are equivalent to each other as information of these pieces of data.

Therefore, there is bidirectionality between the text format and the binary format, and even when MPEG-7 meta-data described as an XML document is temporarily converted into MPEG-7 binary data and then converted into XML text data again, the original information is perfectly maintained.

Even in a binary format, random access to the data contents is possible, and in addition, operations such as deletion of only a part of a description inside data or rewriting of other contents are also possible.

Herein, in the invention, a description is sufficient if the description is made as meta-data, and descriptions in any of the abovementioned formats are also included in the invention.

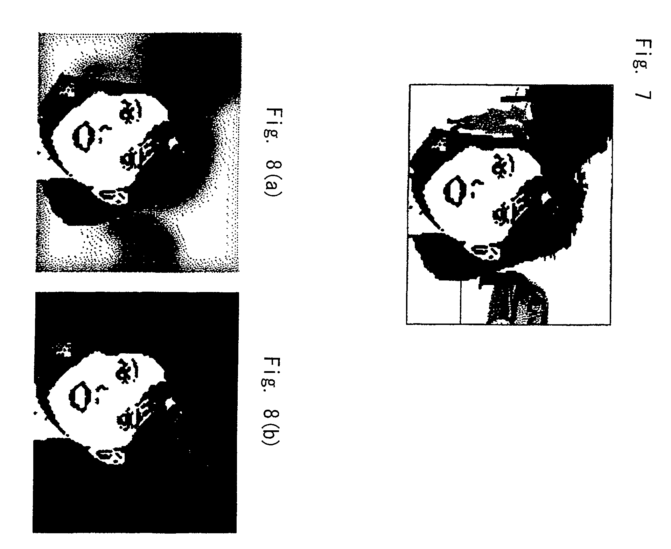

Next, with reference to Fig. 7 through Fig. 12, processing to be executed by the transmitting data processing means 6 will be described.

This transmitting data processing means 6 prepares control information in which an image inputted from the image input means 4, a focused region extracted by the region extracting means 5, and disclosure control information inputted from the input means 2 are related to each other.

Herein, in this example, the transmitting data processing means 6 executes processing so that other users are prevented from understanding the details of a region that is set as a nondisclosure region based on the control information. However, in place of the transmitting data processing means 6, this processing can be executed by a receiving data processing means 8 of the communications partner side which receives this control information and image, or by an information processing device on another communications path.

In any case, it is only required that processing is executed by a certain means on a communications path until another user finally looks at the image so that the nondisclosure request is satisfied, and in the invention, the processing manner is not limited to this case where the transmitting data processing means 6 executes the processing.

Fig. 7 shows original input data before being processed, and Figs. 8 through Fig. 11 show examples of images for which various processings have been applied. These examples can be used by being optionally combined.

Herein, the region extracting means 5 extracts the face as a focused region.

Fig. 8 shows the results of the processings to set the non-focused region (background) as a nondisclosure region. In order to set the background so as not to be disclosed, the background is shaded off in Fig. 8(a), and in Fig. 8(b), the background is darkened.

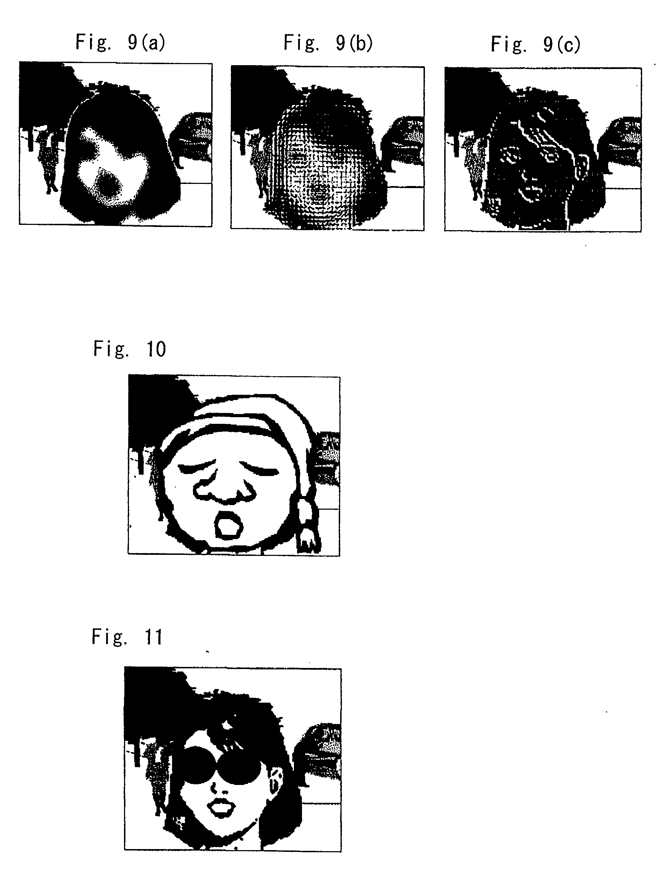

On the contrary, Figs. 9 through Fig. 11 show examples of the results of the processings to set the focused region (facial region) so as not to be disclosed. In Fig. 9(a), the focused region is shaded off, and in Fig. 9(b), the focused region is mosaicked, and in Fig. 9(c), the focused region is embossed.

Fig. 10 shows an example in which, on the facial region that is the focused region, a predetermined computer graphics (CG) character or character image that is different from the image of the focused region is superimposed. Furthermore, as shown in Fig. 11, it is also considered that a CG or an image representing sunglasses is superimposed on the eye portions in the facial region that is the focused region.

In addition to these processings, various processing methods can be considered, and the processings can be used only if they make it impossible for other users to understand the details of the region set as a nondisclosure region in an image. Furthermore, the illustrated processings themselves can be carried out according to generally-known techniques.

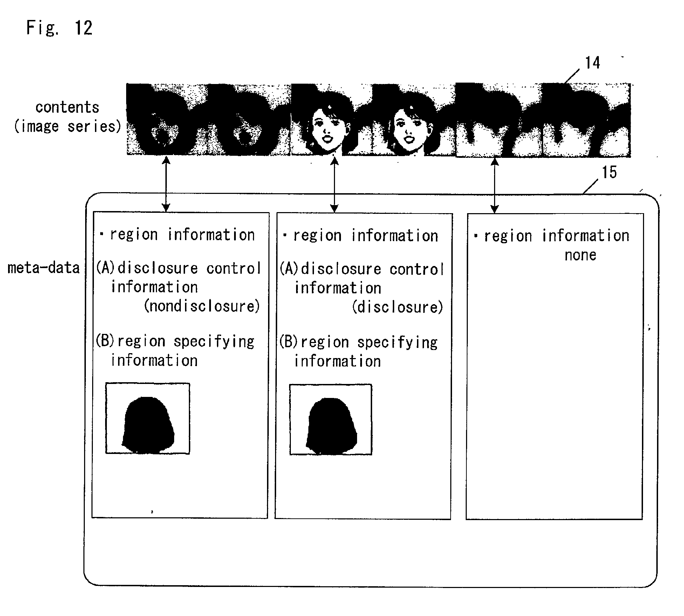

Thus, in the present embodiment, the transmitting data processing means 6 executes processing which makes it impossible for other users to understand the details of a nondisclosure region in an image. Fig. 12 is an example of output data after applying processing to the input data of Fig. 3.

As mentioned above, according to the invention, an information processing device at a communications partner side, which receives output data, acquires a moving picture in which a region set so as not to be disclosed has been processed, and meta-data including disclosure control information existing by being paired with the region.

The abovementioned processing may be encoding. In this case,

(Example 1) a nondisclosure region is encoded by a public key, a public key certification is attached to the meta-data and then the data is transmitted so that a receiver who is permitted to look at this nondisclosure region can decode the nondisclosure region by a private key corresponding to the public key, or (Example 2) a nondisclosure region is encoded by a common key, and the common key is encoded and attached to the meta-data, and then the data is transmitted so that a receiver who is permitted to look at this nondisclosure region can decode the common key by a private key to acquire the common key and decode the nondisclosure region by this common key.

In (Example 1), there is an advantage that different encodings can be easily applied to each nondisclosure region, and in (Example 2), there is an advantage that the processing burden is lighter.

Furthermore, in both of (Example 1), and (Example 2), a person who has a private key can decode and look at a nondisclosure region, and a person who does not have the key cannot look at the region. Namely, only specific persons can look at a nondisclosure region of an image although the image is transmitted through the same network to the specific persons and others.

The communications manner between the communications device of the present embodiment and a receiving information processing device may be synchronous communications such as videophones or asynchronous communications such as electronic mail.

In any communications manner, there is a case where transmitting data transmitted by the communications device of the present embodiment is recorded in a receiving side information processing device.

In such a case, an image series and a description related to this are simultaneously received and recorded, and therefore, even when it is desired later to reproduce only a disclosed portion, it is not necessary to search through the entire image series by using fast-forwarding, and it is sufficient to search through contents describing data, and this makes data handling easier.

Therefore, according to the present embodiment, very easy and efficient retrieval can be carried out at high speed.

Furthermore, due to the abovementioned stream system, management of images themselves is also easy. For example, meta-data is allowed to include a communications date or time other than the disclosure control information. Taking-in of such meta-data together with an image eliminates the possibility that information such as date and time described in the meta-data and disclosure control information are lost, misplaced, or deleted by mistake.

Therefore, when image recording is carried out by a recording means of a receiving side information processing device, it is not necessary to store information on contents descriptions in a separate file, and the information on contents descriptions can be managed by its file itself. Thereby, it is not necessary for a user to understand contents descriptions in advance, and a user can acquire image data on demand.

As mentioned above, according to the communications method relating to the first embodiment of the invention, meta-data related to an image series exists, and disclosure control information is included in the meta-data. Therefore, total data management becomes easier when recording this data, and in a case where the contents are searched through afterwards, only a disclosed portion can be retrieved by using the information of the meta-data, so that data can be extremely efficiently retrieved.

In the present embodiment, an example of interactive communications by the communicating means 7 has been explained, and furthermore, the present invention can be applied to video mail in which simplex communications of image data is carried out from the user 1 to a communications partner.

In this case, an information processing device of the communications partner may only be constructed so as to receive and display transmitted image data.

### (Second embodiment)

Next, as a second embodiment, a method is disclosed which is effective in a case where the communications partners which the communications device of the invention communicates with are 2 or more communications devices, and transmitting data is to be disclosed to a part of the communications partners, and is not to be disclosed to other parties.

In this case, between a transmitting side communications device and a receiving side communications device, the communications control unit of the invention, which controls communications between these devices is interposed. This communications control unit is also included in the "communications device" of the invention.

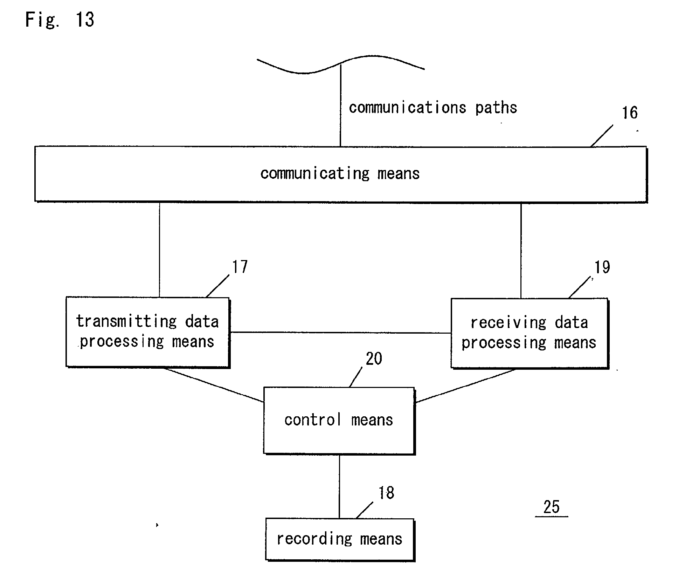

Fig. 13 is a block diagram of the communications control unit which realizes the communications method of the second embodiment of the invention.

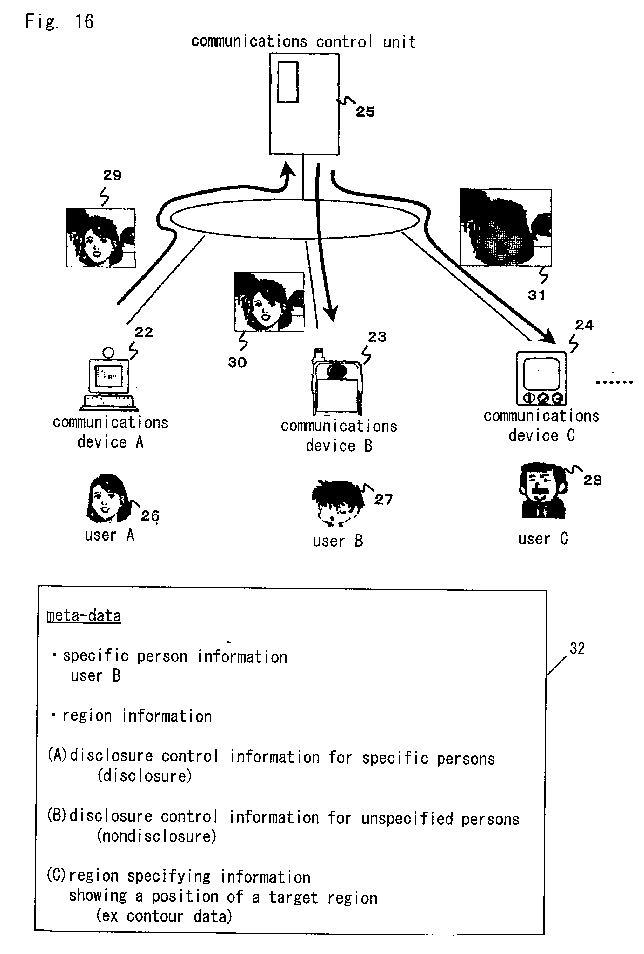

Herein, as shown in Fig. 16, communications among three communications devices A, B, and C are controlled by the communications control unit 25 shown in Fig. 13.

As shown in Fig. 13, the communications control unit 25 comprises a communicating means 16, a receiving data processing means 17, a recording means 18, a transmitting data processing means 19, and a control means 20.

Herein, as shown'in Fig. 16, the communicating means 16 exchanges data with the three communications devices A, B, and C through communications paths. The communications mode herein is optional, for example, synchronous communications as in the case with videophones or asynchronous communications as in the case with electronic mail.

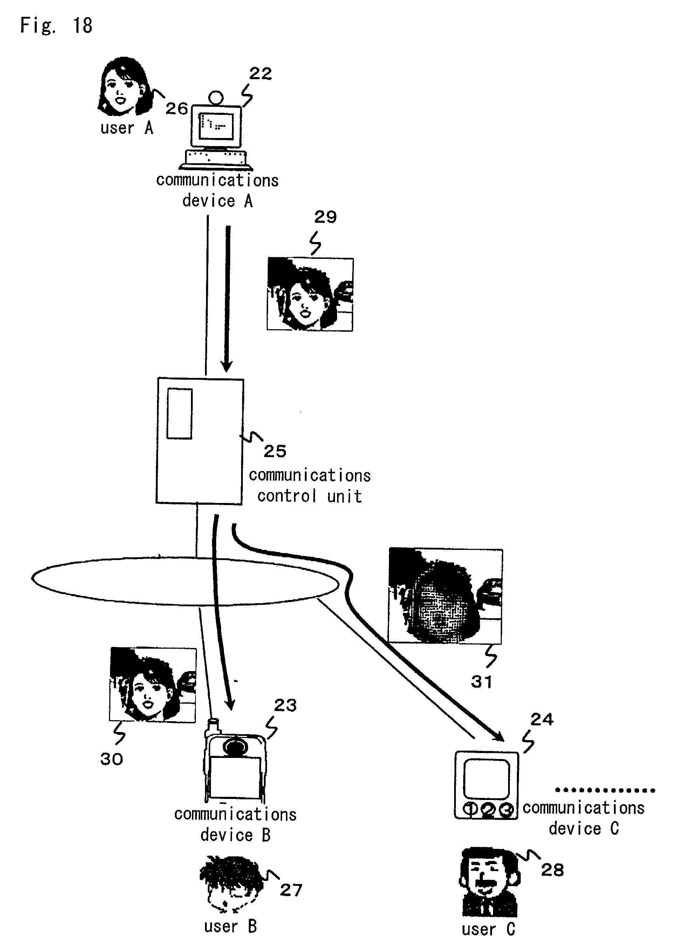

The network configuration of Fig. 18 is also employed as well as that of Fig. 16. In this case, the communications devices B and C exist on the same network, and the communications device A can be connected to this network only under a condition where the communications control unit 25 is interposed between the device and the network.

Thereby, a raw image (including a nondisclosure region that has not been protected) picking-up the user A is transmitted to the communications control unit 25 by the communications device A, but is prevented from passing through this network unless some processing is applied to this raw image, and this improves confidentiality of the nondisclosure region.

Therefore, such a network configuration (particularly, configuration between the communications device A and the communications control unit 25) is useful for a service business internal network providing a video image check service using an IP camera or a moving picture distribution service.

In Fig. 13, the receiving data processing means 17 receives data from the communications devices A, B, and C, and analyzes the received meta-data, and acquires information necessary for the transmitting data processing means 19.

This data includes, besides the control information on disclosure and nondisclosure, at least one piece of distinguishing information such as an index for distinguishing users who use the respective devices A, B, and C, user groups to which the users belong, or devices which the users use. This data will be described in detail later.

The recording means 18 stores all or a part of information on users who use the communications control unit, user groups to which the users belong, or devices which the users use. Furthermore, this recording means 18 records data as the occasion demands when receiving the data.

When an image series of the data received by the receiving data processing means 17 needs to be processed, the transmitting data processing means 19 applies processing to the image series so that a nondisclosure region is prevented from being revealed.

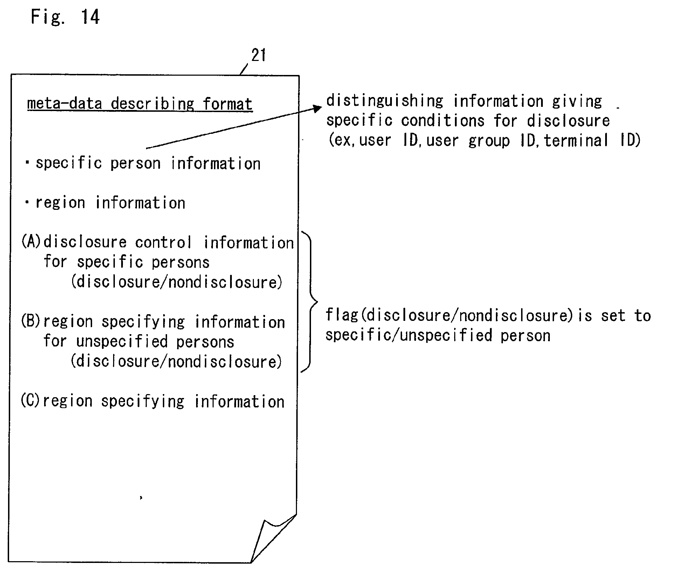

Next, with reference to Fig. 14, a format of data to be communicated between communications devices according to the communications method of the present embodiment will be described.

In Fig. 14, a meta-data describing format to be used in this embodiment is shown. In this embodiment, information on a specific person (specific person information is newly added to the first embodiment.

"Specific person" indicates a user for whom it is desired to set a value different from a value for unspecified persons for disclosure and nondisclosure of a region, for example, information on users, user group information, affiliated organization information, address information including electronic addresses, and terminal distinguishing information.

Herein, in the MPEG-7, "agent" is the general term for objects which handle data to be communicated. As shown in Fig. 14, region information includes disclosure control information for specific persons separately from disclosure control information for unspecified persons.

The contents of disclosure control information are the same as in the first embodiment.

Thus, by correcting the format of the first embodiment into the format of Fig. 14, for example, in a case where data is transmitted from the communications device A to the communications devices B and C, a user of the communications device B is set as a "specific person" and handled differently from unspecified persons (users of the communications devices A and C), whereby control between disclosure and nondisclosure can be made.

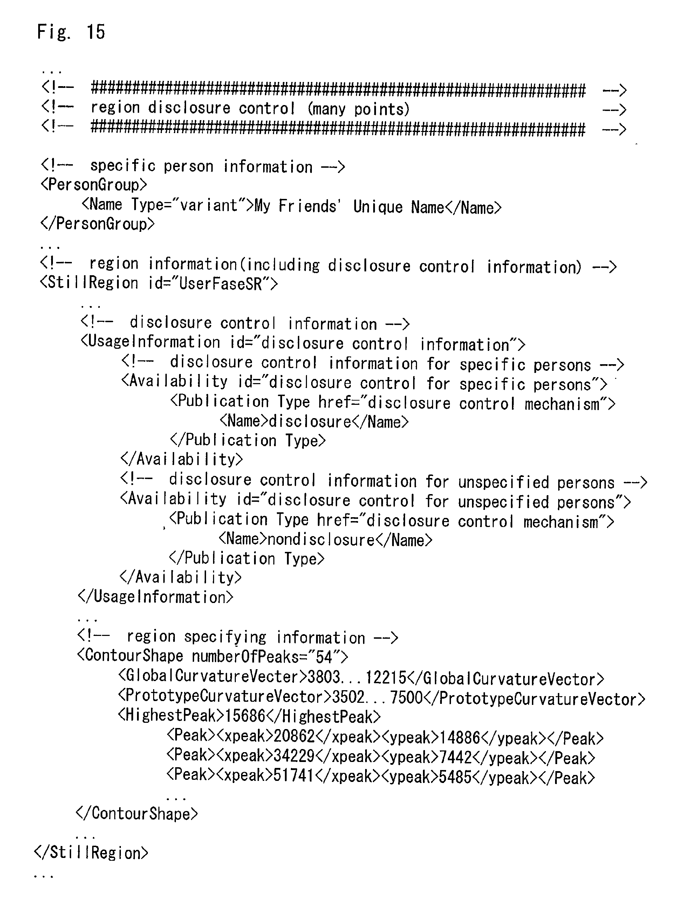

Fig. 15 shows an example of a description by using the MPEG-7 format for the meta-data describing format of Fig. 14. Herein, in comparison with Fig. 4 relating to the first embodiment, "Person Group DS" is newly and additionally used as specific person information.

For this Person Group DS, a unique name indicating, for example, a user's friends group can be provided as specific person information.

In this embodiment, an example in which a group's unique name has been provided in advance is described, however, it is also possible that the user's friends group is defined in advance. In this case, it is defined in Person Group DS as to what members are to be included in the group.

As specific person information, Person Group DS has been described herein, however, other than this, in the MPEG-7, there are "Person DS" indicating persons, "Organization DS" indicating organizations, "Agent DS" as the general term defining objects that handle data to be communicated, and "Place DS" indicating places. All of these have an effect equivalent to that of the example of Person Group DS and is included in the invention only if it is information that specifies users.

Next, an explanation is given about a flow of control of disclosure/nondisclosure of an image series depending on the communications partners A, B, and C by the communications control unit 25 based on the specific person information in the abovementioned meta-data description.

Fig. 16 is a schematic diagram showing communications among at least three communications devices A, B, and C via the communications control unit 25.

Herein, it is assumed that data is transmitted from the communications device A to the communications devices B and C, and the facial region is set as a focused region.

In the meta-data to be transmitted from the communications device A, user B distinguishing information has been set as specific person information.

In this case, when data is transmitted from the communications device A to the communications devices B and C via the communications control unit 25, transmitting data is transmitted in the same form as the data 29 in which the focused region has been disclosed.

Then, the receiving data processing means 17 of the communications control unit 25 (see Fig. 13) acquires distinguishing information and disclosure control information from the meta-data, and in a case where the transmission destination is the user B, according to the disclosure control information for a specific person, the transmitting data processing means 19 transmits the data in the form of data 30 in which the focused region has been disclosed. On the other hand, to the user C who is not a specific person, the transmitting data processing means 19 applies processing to conceal details of the facial region that is a nondisclosure region in the same manner as data 31 and then transmits the processed data.

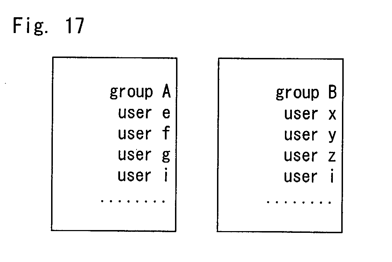

For this specific person information, not a user but a user group can be set. This user group is like a mailing list in normal electronic mail systems, and this information is set in the recording means 18 of the communications control unit 25. Fig. 17 shows an example of such a group setting.

In this case, group information is set as a list structure divided for each group as shown in Fig. 17, and other than this, a list configuration in which information for distinguishing which of the groups the users belong to is added to the user list may be employed.

Furthermore, a method may be employed in which information on the group and organization is exchanged during communications with the respective communications destinations and midstream results information is stored in the recording means 18.

All of these methods are included in the invention on condition that the communications control unit 25 can recognize the user group distinguishing information.

As described above, according to the communications method of the embodiment, an image can be transmitted in different manners of region disclosure to specific persons and unspecified persons.

Therefore, when a user desires not to disclose a part of an image to a specific person for privacy protection, the part can be set so as not to be disclosed, and when the user desires to disclose the part to only a specific person, the part can be set so as to be disclosed. This communications method is very convenient for users, in which privacy protection is taken into account.

As described above, according to the invention, image communications can be carried out while securing privacy protection.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. A communications method using images, which communicates an image series including one or more images and control information that is related to at least one of the images of the image series and concerns disclosure/nondisclosure of the image, wherein
this control information is related to either or both of a focused region and a non-focused region which include a part or all of an object within the image, and includes information as to whether or not the related region is to be disclosed.

2. The communications method using images according to Claim 1, wherein processing is applied to a region that has been set as a nondisclosure region according to the control information so that the details of the region are prevented from being revealed.

3. The communications method using images according to Claim 1, wherein the image series is an encoded moving picture.

4. The communications method using images according to Claim 2, wherein said processing is image processing for lowering the image quality of a nondisclosure region.

5. The communications method using images according to Claim 4, wherein said processing is processing for lowering the resolution of a nondisclosure region.

6. The communications method using images according to Claim 4, wherein said processing is processing for eliminating a nondisclosure region or for converting expression of a nondisclosure region using binarization processing.

7. The communications method using images according to Claim 2, wherein said processing is processing for encoding a nondisclosure region.

8. The communications method using images according to Claim 4, wherein the images compose an encoded moving picture, and said processing is processing for controlling encoding parameters when carrying out this encoding so that disclosure and nondisclosure regions are correctly disclosed and not disclosed.

9. The communications method using images according to Claim 1, wherein the focused region is a skin-color region.

10. The communications method using images according to Claim 1, wherein the focused region is a region including a part or all of the face and head.

11. The communications method using images according to Claim 1, wherein a nondisclosure region is a region including a part or all of the face and head, and said processing is processing for superimposing an object so as to cover a part or all of the nondisclosure region.

12. The communications method using images which communicates an image series including one or more images and control information that is related to at least one of the images of the image series and concerns disclosure/nondisclosure of the image, wherein
said control information includes information on disclosure or nondisclosure to specific users separately from unspecified users.

13. The communications method using images according to Claim 12, wherein information on disclosure or nondisclosure to specific users is composed of at least one kind or a combination of two or more kinds among information on users who use the image series, user group information, affiliated organization information, address information including electronic addresses, terminal distinguishing information, and agent information on agents which access the images.

14. The communications method using images according to Claim 12, wherein information on disclosure or nondisclosure to specific users includes any information of a key which has encoded a nondisclosure region, information of said key that has been encoded, certification information on the key that has encoded the nondisclosure region, and information of said certification information that has been encoded.

15. The communications method using images according to Claim 1, wherein, in a case where an image is communicated to a specific user, disclosure of the related region is controlled according to the control information on disclosure/nondisclosure to this specific user.

16. The communications method using images according to Claim 1, wherein control information is data described in the form of meta-data related to at least one of the images of the image series.

17. The communications method using images according to Claim 16, wherein the meta-data is described in a standardized format.

18. The communications method using images according to Claim 17, wherein the standardized format is the MPEG-7 format.

19. A communications device comprising:
communicating means(7) operable to communicate data with opposite communications devices via communications paths;
recording means(9) operable to recorde an image series including one or more images;
input means(2) operable to input disclosure control information indicating whether or not a specific region forming a part or all of an image is to be disclosed to the communications partners; and
transmitting data processing means(6) operable to prepare transmitting data to which processing has been applied according to disclosure control information so as to prevent details of a nondisclosure region in an image from being revealed to the communications partners and transmitting this transmitting data to the communications devices of the communications partners by using said communicating means(7).

20. The communications device according to Claim 19, wherein said disclosure control information consists of only disclosure control information for unspecified users.

21. The communications device according to Claim 20, wherein said disclosure control information includes disclosure control information for specific users.

22. The communications device according to Claim 19, wherein said disclosure control information is described as meta-data in the MPEG-7 format.
